# EUROPÄISCHE PATENTSCHRIFT

(11) **EP 1 549 690 B1**
(45) Veröffentlichungstag und Bekanntmachung des Hinweises auf die Patenterteilung: **07.03.2012**
(21) Anmeldenummer: 03750622.7
(22) Anmeldetag: 25.09.2003
(51) Int. Cl.: C08G 18/08, C08G 18/76, C08G 18/66, C09D 11/00

(54) **AUFZEICHNUNGSFLÜSSIGKEITEN**
RECORDING LIQUIDS
LIQUIDES D'IMPRESSION

(30) Priorität: 27.09.2002 DE 10245209
(43) Veröffentlichungstag der Anmeldung: 06.07.2005
(73) Patentinhaber: BASF SE, 67056 Ludwigshafen (DE)
(72) Erfinder: KRÜGER, Christian, 55291 Saulheim (DE); HEES, Ulrike, 68159 Mannheim (DE); VAN GELDER, Richard, 67346 Speyer (DE); FÜSSER, Peter, 67454 Hassloch (DE); SCHULZ, Lothar, 69226 Nussloch (DE); BOHRMANN, Hans-Günter, 67067 Ludwigshafen (DE); PUTTNER, Dieter, 69207 Sandhausen (DE); EBERT, Sophia, 55118 Mainz (DE)
(86) Internationale Anmeldenummer: PCT/EP2003/010656
(87) Internationale Veröffentlichungsnummer: WO 2004/031255

(56) Entgegenhaltungen:
- WO-A-00/22055
- WO-A-01/34394
- WO-A-03/029362
- DE-A- 4 107 136
- DATABASE WPI Section Ch, Week 199433, Derwent Publications Ltd., London, GB; Class A25, AN 1994-269615 & JP 06 200149 A (SANYO CHEM IND LTD) 19 Juli 1994

## Beschreibung

Die vorliegende Erfindung betrifft Aufzeichnungsflüssigkeiten, insbesondere Tinten für den Ink-Jet-Druck.

An Tinten, die beim Ink-Jet-Verfahren (Tintenstrahldruckverfahren wie Piezo Ink Jet, Continuous Ink Jet, Valve Jet) eingesetzt werden, werden hohe technische Anforderungen gestellt: Sie müssen eine zum Drucken geeignete Viskosität und Oberflächenspannung aufweisen, sie müssen lagerstabil sein, d.h. sie sollen nicht koagulieren oder flokkulieren, und sie dürfen nicht zur Verstopfung der Druckerdüse führen, was insbesondere bei pigmentierten, also im Medium unlösliche Farbmittelteilchen enthaltenden Tinten problematisch sein kann. Die Anforderungen an die Lagerstabilität dieser Tinten beinhaltet zusätzlich, dass sich die dispergierten Farbmittelteilchen nicht absetzen. Schließlich müssen die Tinten im Falle des Continuous Ink Jet stabil gegen den Zusatz von Leitsalzen sein und dürfen bei Erhöhung des Ionengehaltes keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B. Lichtechtheit, und ein gutes Trocknungsverhalten aufweisen.

Diesen Anforderungen lässt sich durch geeignete Dispergieradditive begegnen. Aus der Literatur sind verschiedene Dispergieradditive bekannt, deren Eigenschaften jedoch weiter optimiert werden müssen.

Nach dem Bedrucken eines Substrates, beispielsweise eines textilen Substrates, sollen die Tinten auf dem Substrat verbleiben und keinesfalls beispielsweise beim Waschen des Textils wieder in einer Waschflotte dispergiert werden. Hierfür ist der Zusatz eines Bindemittels zur Tinte oder eine entsprechende Behandlung des Textils kurz vor oder aber nach dem Bedrucken erforderlich, was einen zusätzlichen Arbeitsschritt beinhaltet.

WO 00/17250 beschreibt die Verwendung von Dispergiermitteln mit Blockcopolymerstruktur, bestehend aus einem di- oder polyfunktionellen Isocyanat und einem Block, der an seinem Ende mit einer polaren Gruppe, beispielsweise COOH, terminiert ist und dessen Endgruppe mit beispielsweise Polyamiden oder Vinylgruppen tragenden N-haltigen Heterocyclen umgesetzt wurde. Mit derartigen Dispergiermitteln hergestellte Tinten zeigen zwar sehr gute Eigenschaften in Bezug auf Reibechtheit und Wasserechtheit, jedoch lässt bei Drucken auf Textil die Fixierung nach mehreren Wäschen noch Optimierungsbedarf erkennen. Desgleichen lässt die Fixierung bei Substraten deutlich nach, die gebogen, geknickt oder gefaltet werden.

WO 99/41320 beschreibt Tinten für den Tintenstrahldruck, die als Dispergiermittel Polyurethane mit beispielsweise Dimethylolpropionsäure oder Polyethylenmonomethylether als dispergierende Gruppen enthalten, und zwar statistisch über das Molekül verteilt. Die unter Verwendung der beschriebenen Polyurethane hergestellten Tinten zeichnen sich zwar durch gute Lagerstabilität und gute bis mäßig gute Druckeigenschaften aus, insbesondere was den Düsenausfall betrifft, jedoch ist die Fixierung der Drucke für kommerzielle Anwendungen zu gering.

WO 99/50364 beschreibt die Verwendung von Polyurethanen als Dispergiermittel in Tinten für das Ink Jet-Verfahren, die ein wasserlösliches sowie ein wasserunlösliches Lösemittel und Wasser enthalten. Die Polyurethane enthalten dispergierende, d.h. in Wasser löslich machende Gruppen, statistisch über das Molekül verteilt. Die Fixierung der Farbe lässt sich jedoch noch verbessern.

EP-A 0 739 959 beschreibt statistische Polyurethan-Copolymere und ihre Verwendung als Dispergiermittel.

WO 00/03081 beschreibt ein Verfahren zum Bedrucken textiler Substrate mit Hilfe des Tintenstrahldruckverfahrens durch Vorbehandlung des Substrats mit einem Bindemittel. Dieses Verfahren verlangt einen zusätzlichen Arbeitsschritt. Es ist aus wirtschaftlichen Gründen sinnvoll, eine Tinte zu entwickeln, die den zusätzlichen Arbeitsschritt unnötig macht. Als Bestandteil dieser Tinten sind die aus dem Stand der Technik bekannten Dispergiermittel jedoch ungeeignet.

Es bestand somit die Aufgabe, den Nachteilen des Standes der Technik abzuhelfen und neue Aufzeichnungsflüssigkeiten bereitzustellen, die insbesondere eine niedrige Viskosität aufweisen und Drucke mit guter Fixierung, Farbstärke und Brillianz und guten Gebrauchsechtheiten (Waschechtheit bzw. Nass- und Trockenreibechtheit) ergeben. Gelöst wird die Aufgabe durch ein Verfahren zum Bedrucken flächiger oder dreidimensionaler Substrate nach dem Ink-Jet-Verfahren unter Verwendung von Aufzeichnungsflüssigkeiten, enthaltend statistische Polyurethancopolymere und Melaminderivate als Vernetzer.

Die Aufzeichnungsflüssigkeiten enthalten darüber hinaus organische oder anorganische Farbmittel, gegebenenfalls weitere Dispergiermittel, Lösemittel sowie übliche Additive.

### Statistische Polyurethancopolymere

Statistische Polyurethancopolymere werden aus einem oder mehreren verschiedenen Di- oder Polyisocyanaten und einer oder mehreren verschiedenen weiteren Verbindungen, die mindestens zwei gegenüber Isocyanatgruppen reaktive Gruppen aufweisen, erhalten. Die sich von den Diisocyanaten einerseits und den weiteren Verbindungen ableitenden Einheiten andererseits sind alternierend angeordnet, wobei bei Verwendung von zwei oder mehr verschiedenen Diisocyanten bzw. zwei oder mehr verschiedenen weiteren Verbindungen diese Einheiten im gebildeten Polymer jeweils statistisch verteilt vorliegen. Statistische Polyurethancopolymere weisen dementsprechend keine Blockstruktur auf.

Unter Polyurethanen sind im Rahmen der vorliegenden Erfindung nicht nur solche Polymere zu verstehen, die ausschließlich durch Urethangruppen verknüpft sind, sondern in einem allgemeineren Sinne Polymere, die durch Umsetzung von Di- oder Polyisocyanaten mit Verbindungen erhalten werden können, die aktive Wasserstoffatome enthalten. Polyurethane im Sinne der vorliegenden Erfindung können also neben Urethangruppen auch Harnstoff-, Allophanat-, Biuret-, Carbodiimid-, Amid-, Ester-, Ether-, Uretonimin-, Uretdion-, Isocyanurat- oder Oxazolidingruppen enthalten. Als Übersicht sei beispielhaft genannt: Kunststoffhandbuch/Saechtling, 26. Auflage, Carl-Hanser-Verlag, München 1995, Seite 491 ff. Insbesondere enthalten Polyurethane im Sinne der vorliegenden Erfindung Harnstoffgruppen.

Zur Herstellung der statistischen Polyurethancopolymere setzt man nach bekannten Methoden ein oder mehrere Diisocyanate mit einer oder mehreren Verbindungen um, die zwei gegenüber Isocyanat reaktive Gruppen tragen. Daneben können in dem Umsetzungsgemisch auch in gewissem Umfang Verbindungen enthalten sein, welche nur eine gegenüber Isocyanat reaktive Gruppe tragen. Dabei können das oder die Diisocyanate NCO-Gruppen mit gleicher oder verschiedener Reaktivität aufweisen. Diisocyanate mit NCO-Gruppen gleicher Reaktivität können aromatische oder aliphatische Diisocyanate sein, bevorzugt sind aliphatische Diisocyanate wie Tetramethylendiisocyanat, Hexamethylendiisocyanat, Octamethylendiisocyanat, Decamethylendiisocyanat, Dodecamethylendüsocyanat, Tetradecamethylendiisocyanat, Trimethylhexandiisocyanat, Tetramethylhexandiisocyanat, 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat, IPDI) und 2,4- und 2,6-Düsocyanato-1-methylcyclohexan, wobei Hexamethylendiisocyanat (HDI) und Isophorondiisocyanat besonders bevorzugt sind. Weitere besonders bevorzugte Diisocyanate sind m-Tetra-methylxyloldiisocyanat (TMXDI) und 4,4'-Diphenylmethandiisocyanat (4,4'-MDI).

Bevorzugte Diisocyanate mit NCO-Gruppen unterschiedlicher Reaktivität sind die leicht und billig verfügbaren Isocyanate wie beispielsweise 2,4- Toluylendiisocyanat (2,4-TDI), 2,4'-Diphenylmethandiisocyanat (2,4'-MDI), Triisocyanatotoluol als Vertreter für aromatische Diisocyanate oder aliphatische Diisocyanate, wie 2-Butyl-2-ethylpentamethylendiisocyanat, 2-Isocyanatopropylcyclohexylisocyanat, 2,4,4- oder 2,2,4-Trimethylhexamethylendiisocyanat, 2,4'-Methylenbis(cyclohexyl)diisocyanat und 4-Methylcyclohexan-1,3-diisocyanat (H-TDI).

Weitere Beispiele von Isocyanaten mit Gruppen unterschiedlicher Reaktivität sind 1,3-Phenylendiisocyanat, 1,4-Phenylendiisocyanat, 1,5-Naphthylendiisocyanat, Diphenyldiisocyanat, Tolidindiisocyanat und 2,6-Toluylendiisocyanat.

Natürlich kann man auch Mischungen von mindestens zwei der vorstehend genannten Isocyanate verwenden.

Man kann auch Anteile des Diisocyanats durch Polyisocyanate, beispielsweise Triisocyanat oder Tetraisocyanat, ersetzen, um Verzweigungen in das statistische Polyurethancopolymere einzubauen.

Beispiele für Verbindungen, die zwei gegenüber Isocyanat reaktive Gruppen tragen wie beispielsweise OH, SH, NH₂ oder NHR, wobei R aus C₁-C₁₂-Alkyl ausgewählt wird, sind Diole und sekundäre Diamine. Bevorzugt sind sekundäre Diamine, beispielsweise 1,4-Butylen-N,N'-dimethylamin, und insbesondere lineare oder verzweigte Alkandiole oder Cycloalkandiole mit 2 bis 10 C-Atomen im Alkylenrest. Insbesondere kommen in Frage: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol sowie trans-1,4-Cyclohexandimethanol. Man kann auch Gemische der vorstehend genannten Verbindungen einsetzen. Weiterhin sind Verbindungen geeignet, die verschiedene gegenüber Isocyanat reaktive Gruppen enthalten, beispielsweise Thioglykol oder Ethanolamin oder Methyldiethanolamin.

Beispiele für Verbindungen, die nur eine gegenüber Isocyanat reaktive Gruppen tragen und die in gewissem Umfang, beispielsweise bis zu 20 Gew.-%, bevorzugt bis zu 10 Gew.-%, bezogen auf das Polyurethan, enthalten sein können, sind Methyl-terminierte Polyethermonoole oder Polyestermonoole.

Bevorzugt wird ein Diisocyanat mit zwei oder mehr verschiedenen Diolen umgesetzt.

Geeignete Katalysatoren, welche insbesondere die Reaktion zwischen den NCO-Gruppen der Diisocyanate und den Hydroxylgruppen und Aminogruppen der Verbindungen, die zwei gegenüber Isocyanat reaktive Gruppen trägt, beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Diol bzw. Diamin eingesetzt.

Die Synthese der statistischen Polyurethancopolymere wird im Allgemeinen in Substanz oder in einem aprotischen Lösemittel durchgeführt, beispielsweise in Tetrahydrofuran, Diethylether, Diisopropylether, Chloroform, Dichlormethan, Di-n-butylether, Aceton, N-Methylpyrrolidon (NMP), Xylol, Toluol, Methylethylketon (MEK), Methylisobutylketon (MIBK) oder 1,4-Dioxan. Bevorzugte Reaktionstemperaturen liegen im Bereich von 10°C bis zum Siedepunkt des eingesetzten Lösemittels. Die Reaktion wird im Allgemeinen drucklos durchgeführt, jedoch kann sie auch im Autoklaven bei bis zu 20 bar durchgeführt werden.

Die Copolymerbildung wird vorzugsweise durch Zugabe eines sogenannten "Abstoppers" beendet. Hierfür geeignet sind beispielsweise sekundäre Amine, Alkohole und Thiole, bevorzugt sind sekundäre Amine, besonders bevorzugt sind Dialkylamine und Dialkanolamine. Beispiele sind Diethanolamin, Diethylamin, Dibutylamin und Ethanolethylamin.

Zusätzlich zu Diisocyanaten und Diolen kann man in das statistische Polyurethancopolymere hydrophile Gruppen einbauen. Als hydrophile Gruppe führt man bevorzugt Carboxylgruppen ein, die beispielsweise durch Dihydroxycarbonsäuren wie Dimethylolpropionsäure ("DMPS") oder Citronensäure eingeführt werden können. In einer anderen Ausführungsform der vorliegenden Erfindung führt man ein Sulfonsäuregruppenhaltiges Diol ein, beispielsweise das Michael-Addukt von Diethanolamin an Acrylaminopropansulfonsäure. Ganz besonders bevorzugt ist Dimethylolpropionsäure. Weiterhin lassen sich ausgewählte Diole als zusätzliche hydrophile Komponenten einbauen: Polyethylenglykole mit 2 bis 50 Ethylen-Einheiten und einem bevorzugten zahlenmittleren Molekulargewicht Mₙ im Bereich von 900 bis 2000 g/mol, Polypropylenglykole mit 2 bis 20 Propyleneinheiten, Poly-THF-Derivate mit 2 bis 10 Tetramethyleneinheiten sowie Polyesterpolyole, vorzugsweise Polyesterdiole. Unter Polyesterpolyolen werden gesättigte, gegebenenfalls Ethergruppen enthaltende Polyester bzw. Polyether verstanden, die mindestens zwei freie Hydroxylgruppen pro Molekül enthalten, bevorzugt enthalten sie zwei bis zehn und besonders bevorzugt genau zwei freie Hydroxylgruppen pro Molekül. Die durchschnittlichen Molekulargewichte Mₙ der Polyesterpolyole betragen von 250 bis 4000 g/mol, bevorzugt von 450 bis 2000 g/mol.

Derartige Polyesterpolyole können in üblicher Weise durch Veresterung von einer oder mehreren Dicarbonsäuren oder Tricarbonsäuren oder Mischungen von Dicarbonsäuren mit Tricarbonsäuren mit Diolen oder Triolen erhalten werden. Die Veresterung kann in Substanz oder auch durch azeotrope Veresterung in Anwesenheit eines Schleppmittels durchgeführt werden. Die Ausgangsstoffe für Polyesterpolyole sind dem Fachmann bekannt. Bevorzugt können als Dicarbonsäuren Bernsteinsäure, Glutarsäure, Adipinsäure, Sebacinsäure, Pimelinsäure, ortho-Phthalsäure oder deren Isomere und Hydrierungsprodukte sowie veresterbare Derivate der vorstehend genannten Säuren wie beispielsweise Anhydride oder Dialkylester, beispielsweise Dimethylester oder Diethylester, eingesetzt werden. Als Diole kommen bevorzugt in Frage: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, Polyglykole vom Typ des Ethylenglykols und 1,2-Propandiols sowie Diole mit mindestens einer weiteren funktionellen Gruppe wie beispielsweise Dimethylolpropionsäure.

Als Triole sind bevorzugt: Glycerin und Trimethylolpropan.

Zu den einsetzbaren Diolen gehören auch Polycaprolactondiole und Polycaprolactontriole, deren Herstellung dem Fachmann ebenfalls bekannt ist.

Als Polyetherpolyole kommen beispielsweise Umsetzungsprodukte von zwei- und/oder mehrwertigen Alkoholen mit einem oder mehreren Äquivalenten Ethylenoxid und/oder Propylenoxid in Frage. Bei Ethylenoxid-Propylenoxid-Mischkondensationsprodukten kann die Umsetzung zweckmäßig so gesteuert werden, dass endständig überwiegend primäre Hydroxylgruppen erhalten werden. Weiterhin sind auch Polybutylenoxide einsetzbar. Die durchschnittlichen Molekulargewicht Mₙ der Polyetherpolyole betragen von 250 bis 4000 g/mol, bevorzugt von 450 bis 2000 g/mol.

Zum weiteren Einsatz der statistischen Polyurethancopolymere neutralisiert man stark saure hydrophile Gruppen wie Carboxylgruppen und Sulfonsäuregruppen mit Basen. Vorzugsweise neutralisiert man sie mit flüchtigen Basen wie beispielsweise Ammoniak oder flüchtigen primären, sekundären oder tertiären Aminen, beispielsweise Methylamin, Ethylamin, Dimethylamin, Diethylamin, Trimethylamin, Triethylamin, Isopropylamin, Ethyldiisopropylamin, Di-n-butylamin, Ethanolamin, Diethanolamin, Triethanolamin, Methyldiethanolamin, n-Propyldiethanolamin oder n-Butyldiethanolamin.

Spezielle in den erfindungsgemäßen Aufzeichnungsflüssigkeiten eingesetzte statistische Polyurethancopolymere werden aus Gemischen von Neopentylglykol und Polyesterdiolen oder Gemischen von Dimethylpropionsäure und Polyetherdiolen als Diolkomponente und Isophorondiisocyanat, 4,4'-Diphenyldiisocyant oder Hexamethylendiisocyanat als Diisocyanatkomponente erhalten.

### Vernetzer

Die erfindungsgemäßen Aufzeichnungsflüssigkeiten enthalten ein oder mehrere verschiedene Melaminderivate als Vernetzer. Bevorzugte Melaminderivate sind die der allgemeinen Formel (I) 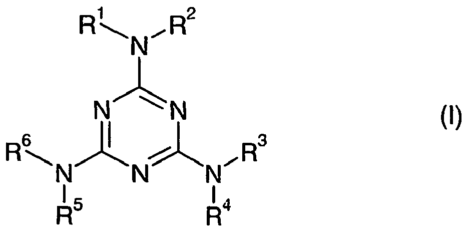 in denen die Variablen R¹ bis R⁶ gleich oder verschieden und wie folgt definiert sind:
Wasserstoff oder (CH₂O)_{z}-R⁷ oder CH₂-OR⁷ oder CH(OR⁷)₂ oder CH₂-N(R⁷)₂,
wobei z = 1 bis 10 ist und R⁷gleich oder verschieden sind und ausgewählt sind aus
Wasserstoff, C₁-C₁₂-Alkyl, verzweigt oder unverzweigt, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
Alkoxyalkylen wie beispielsweise (-CH₂-CH₂-_{O})ₘ-H, (-CHCH₃-CH₂-O)ₘ-H, (-CH₂-CHCH₃-O)ₘ-H, (-CH₂-CH₂-CH₂-CH₂-O)ₘ-H, wobei m eine ganze Zahl von 1 bis 20, bevorzugt von 1 bis 10 und besonders bevorzugt von 1 bis 5 bedeutet.

Bevorzugt sind die Reste R¹, R³ und R⁵ verschieden.

Besonders bevorzugt sind R¹ und R² gleich Wasserstoff. Besonders bevorzugt sind R³ und R⁴ gleich CH₂-OH. Ganz besonders bevorzugt sind R¹ und R² gleich Wasserstoff und R³ gleich CH₂-OH.

Melaminderivate der allgemeinen Formel (I) sind an sich bekannt und beispielsweise als Luwipal^{®} der BASF Aktiengesellschaft und als Cymel^{®} 327 der Firma Cytec im Handel erhältlich. Melaminderivate im Sinne der vorliegenden Erfindung liegen im Allgemeinen nicht rein gemäß einer definierten Formel vor. Üblicherweise werden intermolekulare Umlagerungen der Reste R¹ bis R⁶, also Umacetalisierungsreaktionen und Umaminalisierungsreaktionen, und auch zu einem gewissen Grade Kondensationsreaktionen und Abspaltungsreaktionen beobachtet. Die oben angegebene Formel (I) ist in dem Sinne zu verstehen, dass sie die stöchiometrischen Verhältnisse der Substituenten definiert und auch intermolekulare Umlagerungsprodukte und Kondensationsprodukte und Abspaltungsprodukte mit umfasst.

Üblicherweise setzt man die statistischen Polyurethancopolymere und Melaminderivate in einem Gewichtsverhältnis von 0,01 zu 1 bis 100 zu 1 ein, bevorzugt von 0,1 zu 1 bis 50 zu 1 und besonders bevorzugt von 1 zu 1 bis 10 zu 1 ein.

Durch Mischen der statistischen Polyurethancopolymere und eines oder mehrerer Melaminderivate sind vernetzbare Dispergierbindemittel erhältlich.

Die Herstellung der vernetzbaren Dispergierbindemittel gelingt durch Vermischen von einem oder mehreren der vorstehend beschriebenen statistischen Polyurethancopolymeren mit einem oder mehreren Melaminderivaten, beispielsweise in Kugelmühlen, Rührwerksmühlen, Dispensern, Dissolvern oder Korbmühlen. Beispiele für solche Aggregate sind Geräte der Fa. Getzmann oder der Fa. Skandex, die kommerziell erhältlich sind.

Die Herstellung der Aufzeichnungsflüssigkeiten kann derart erfolgen, dass man ein oder mehrere der vorstehend beschrieben statistischen Polyurethancopolymere mit einem oder mehreren feinteiligen anorganischen oder organischen Farbmitteln, Wasser, gegebenenfalls einem oder mehreren organischen Lösungsmitteln und einem oder mehreren Melaminderivaten und gegebenenfalls Hilfsstoffen (Additiven) innig vermischt.

Ein weiterer Aspekt der vorliegenden Erfindung ist ein Verfahren zur Herstellung von Farbmittelzubereitungen unter Verwendung der Dispergierbindemittel zur Herstellung von Aufzeichnungsflüssigkeiten.

Die erfindungsgemäßen Farbmittelzubereitungen erhält man durch intensives Vermischen der erfindungsgemäßen Dispergierbindemittelsysteme mit einem oder mehreren in Wasser oder Wasser/Lösungsmittelgemisch schwer löslichen Farbmitteln, beispielsweise in einer Kugelmühle. Vorzugsweise werden die erfindungsgemäßen Farbmittelzubereitungen so hergestellt, dass man auf die Isolierung der vernetzbaren Dispergierbindemittelsysteme verzichtet und die statistischen Polyurethancopolymere mit einem oder mehreren Melamindenvaten, Wasser, gegebenenfalls einem oder mehreren organischen Lösungsmitteln und einem oder mehreren in Wasser schwer löslichen Farbmittel vermischt, beispielsweise in einer Kugelmühle bei Drücken von 1 bis 10 bar und Temperaturen von 0 bis 250°C. In einer Kugelmühle hergestellte Farbmittelzubereitungen werden auch als Anreibungen bezeichnet.

Die erfindungsgemäßen Farbmittelzubereitungen enthalten neben den statistischen Polyurethancopolymeren und den Melaminderivaten Wasser sowie in Wasser oder im Wasser/Lösungsmittel-Gemisch praktisch nicht lösliche, dispergierte feinteilige, organische oder anorganische Farbmittel, das sind nach der Definition in DIN 55944 Pigmente. Selbstverständlich können die erfindungsgemäßen Farbmittelzubereitungen auch Farbmittelmischungen enthalten, vorzugsweise liegt jedoch nur ein Farbmittel vor. Als Schönungsmittel können diese Pigmentzubereitungen im Farbton dem Pigment ähnliche lösliche Farbstoffe, insbesondere Direkt-, Säure- oder Reaktivfarbstoffe enthalten.

Im Folgenden sind Beispiele für geeignete Pigmente genannt, wobei Küpenfarbstoffe aufgrund der Überschneidungen mit den organischen Pigmenten mit aufgeführt sind.

### Organische Pigmente:

| | |
|---|---|
| - Monoazopigmente: | C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183; |
| - Disazopigmente: | C.I. Pigment Orange 16, 34 und 44; C.I. Pigment Red 144, 166, 214 und 242; C.I. Pigment Yellow 12, 13, 14, |
| | 16, 17, 81, 83, 106, 113, 126, 127, 155, 174, 176 und 188; |
| - Anthanthronpigmente: | C.I. Pigment Red 168 (C.I. Vat Orange 3); |
| - Anthrachinonpigmente: | C.I. Pigment Yellow 147 und 177; C.I. Pigment Violet 31; |
| - Anthrachinonpigmente: | C.I. Pigment Yellow 147 und 177; C.I. Pigment Violet 31; |
| - Anthrapyrimidinpigmente: | C.I. Pigment Yellow 108 (C.I. Vat Yellow 20); |
| - Chinacridonpigmente: | C.I. Pigment Red 122, 202 und 206; C.I. Pigment Violet 19; |
| - Chinophthalonpigmente: | C.I. Pigment Yellow 138; |
| - Dioxazinpigmente: | C.I. Pigment Violet 23 und 37; |
| - Flavanthronpigmente: | C.I. Pigment Yellow 24 (C.I. Vat Yellow 1); |
| - Indanthronpigmente: | C.I. Pigment Blue 60 (C.I. Vat Blue 4) und 64 (C.I. Vat Blue 6); |
| - Isoindolinpigmente: | C.I. Pigment Orange 69; C.I. Pigment Red 260; C.I. Pigment Yellow 139 und 185; |
| - Isoindolinonpigmente: | C.I. Pigment Orange 61; C.I. Pigment Red 257 und 260; C.I. Pigment Yellow 109, 110, 173 und 185; |
| - Isoviolanthronpigmente: | C.I. Pigment Violet 31 (C.I. Vat Violet 1); |
| - Metallkomplexpigmente: | C.I. Pigment Yellow 117, 150 und 153; C.I. Pigment Green 8; |
| - Perinonpigmente: | C.I. Pigment Orange 43 (C.I. Vat Orange 7); C.I. Pigment Red 194 (C.I. Vat Red 15); |
| - Perylenpigmente: | C.I. Pigment Black 31 und 32; C.I. Pigment Red 123, 149, 178, 179 (C.I. Vat Red 23), 190 (C.I. Vat Red 29) und 224; C.I. Pigment Violet 29; |
| - Phthalocyaninpigmente: | C.I. Pigment Blue 15, 15:1, 15:2, 15:3, 15:4, 15:6 und 16; C.I. Pigment Green 7 und 36; |
| - Pyranthronpigmente: | C.I. Pigment Orange 51; C.I. Pigment Red 216 (C.I. Vat Orange 4); |
| - Thioindigopigmente: | C.I. Pigment Red 88 und 181 (C.I. Vat Red 1); C.I. Pigment Violet 38 (C.I. Vat Violet 3); |
| - Triarylcarboniumpigmente: | C.I. Pigment Blue 1, 61 und 62; C.I. Pigment Green 1; C.I. Pigment Red 81, 81:1 und 169; C.I. Pigment Violet 1, 2, 3 und 27; C.I. -Pigment Black 1 (Anilinschwarz); |
| - | C.I. Pigment Yellow 101 (Aldazingelb); |
| - | C.I. Pigment Brown 22; |

### Küpenfarbstoffe (außer den bereits oben genannten):

- C.I. Vat Yellow 2, 3, 4, 5, 9, 10, 12, 22, 26, 33, 37. 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, S, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;
anorganische Pigmente:

| | |
|---|---|
| - Weißpigmente: | Titandioxid (C.I. Pigment White 6), Zinkweiß, Farbenzinkoxid; Zinksulfid, Lithopone; Bleiweiß; |
| - Schwarzpigmente: | Eisenoxidschwarz (C.I. Pigment Black 11), Eisen-Mangan-Schwarz, Spinellschwarz (C.I. Pigment Black 27); Ruß (C.I. Pigment Black 7); |
| - Buntpigmente: | Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot; |
| | Eisenoxidbraun, Mischbraun, Spinell- und Korundphasen (C.I. Pigment Brown 24, 29 und 31), Chromorange; |
| | |
| | Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184); |
| - Interferenzpigmente: | Metalleffektpigmente auf der Basis beschichteter Metallplättchen; Perlglanzpigmente auf der Basis metalloxidbeschichteter Glimmerplättchen; Flüssigkristallpigmente. |

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße zu nennen.

Beispiele für besonders bevorzugte Pigmente sind im einzelnen: C.I. Pigment Yellow 138, C.I. Pigment Red 122 und 146, C.I. Pigment Violet 19, C.I. Pigment Blue 15:3 und 15:4, C.I. Pigment Black 7, C.I. Pigment Orange 5, 38 und 43 und C.I. Pigment Green 7.

Diese Pigmente können vorteilhaft zur Erstellung von Ink-Jet-Tintensets auf Basis der erfindungsgemäßen Farbmittelzubereitungen eingesetzt werden. Der Gehalt der einzelnen Tinten an den jeweiligen Pigmenten ist dabei an die jeweiligen Erfordernisse (z.B. Trichromie) anzupassen.

Folgende Pigmentkombinationen sind besonders zu empfehlen:
- C.I. Pigment Yellow 138, C.I. Pigment Violet 19, C.I. Pigment Blue 15:3 und C.I. Pigment Black 7;
- C.I. Pigment Yellow 138, C.I. Pigment Red 122, C.I. Pigment Blue 15:3 oder 15:4 und C.I. Pigment Black 7;
- C.I. Pigment Yellow 138, C.I. Pigment Violet 19, C.I. Pigment Blue 15:3, C.I. Pigment Black 7, C.I. Pigment Orange 43 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 5 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 38 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 43 und C.I. Pigment Green 7.

Die erfindungsgemäßen Farbmittelzubereitungen enthalten in der Regel 0,01 bis 20 Gew.-%, bevorzugt 0,2 bis 10 Gew.-%, besonders bevorzugt 1 bis 6 Gew.-% Pigment.

Die ungelösten, dispergierten Pigmente sollten möglichst feinteilig sein. Bevorzugt haben 95%, besonders bevorzugt 99% der Farbmittelteilchen einen mittleren Teilchendurchmesser von 1 µm, vorzugsweise von 0,5 µm und besonders bevorzugt von bis zu 0,2 µm. Bevorzugt beträgt der mittlere Teilchendurchmesser mindestens 0,05 µm.

Wasser stellt den Hauptbestandteil der erfindungsgemäßen Farbmittelzubereitungen dar, wobei vollentsalztes Wasser, wie es mittels eines Ionenaustauschers erhältlich ist, bevorzugt ist. Der Wassergehalt beträgt üblicherweise von 30 bis 95 Gew.-%. Für die erfindungsgemäßen Zubereitungen ist dabei ein Wassergehalt von 40 bis 60 Gew.-% bevorzugt.

Die erfindungsgemäßen Farbmittelzubereitungen weisen einen Gehalt von in der Regel 1 bis 40 Gew.-%, bevorzugt von 5 bis 30 Gew.-% der statistischen Polyurethancopolymeren auf.

Als weitere Komponente können die erfindungsgemäßen Farbmittelzubereitungen ein oder mehrere organische Lösungsmittel als Zusatz enthalten. Niedermolekulares Polytetrahydrofuran ist ein bevorzugter Zusatz, es kann allein oder vorzugsweise im Gemisch mit einem oder mehreren schwer verdampfbaren, in Wasser löslichen oder mit Wasser mischbaren organischen Lösungsmitteln eingesetzt werden.

Das bevorzugt verwendete Polytetrahydrofuran hat üblicherweise ein mittleres Molekulargewicht M_{w} von 150 bis 500 g/mol, bevorzugt von 200 bis 300 g/mol und besonders bevorzugt von etwa 250 g/mol. Polytetrahydrofuran kann auf bekannte Weise über kationische Polymerisation von Tetrahydrofuran hergestellt werden. Dabei entstehen lineare Polytetramethylenglykole.

Als Zusatz eingesetzte andere organische Lösemittel sind im Allgemeinen schwer verdampfbare und damit eine wasserrückhaltende Wirkung besitzende organische Lösungsmittel, die in Wasser löslich oder mit Wasser mischbar sind. Unter schwer verdampfbaren Lösemitteln sind dabei einen Siedepunkt > 100°C aufweisende Lösungsmittel zu verstehen.

Als Lösungsmittel eignen sich mehrwertige Alkohole, bevorzugt unverzweigte und verzweigte mehrwertige Alkohole mit 2 bis 8, insbesondere 3 bis 6 Kohlenstoffatomen, wie Ethylenglykol, 1,2- und 1,3-Propylenglykol oder Glycerin.

Weitere geeignete Lösungsmittel sind Polyethylen- und Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propyl- und - butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Weiterhin als Lösungsmittel geeignet sind Pyrrolidon und N-Alkylpyrrolidone, deren Alkylkette vorzugsweise 1 bis 4, vor allem 1 bis 2 Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel sind 1,2- und 1,3-Propylenglykol, Glycerin, Sorbit, Diethylenglykol, Polyethylenglykol (M_{w} 300 bis 500 g/mol), Diethylenglykolmonobutylether, Triethylenglykolmono-n-butylether, Pyrrolidon, N-Methylpyrrolidon und N-(2-Hydroxyethyl)pyrrolidon.

Polytetrahydrofuran kann auch mit einem oder mehreren (z.B. zwei, drei oder vier) der oben aufgeführten Lösungsmittel gemischt werden.

Die erfindungsgemäßen Farbmittelzubereitungen enthalten in der Regel 0,1 bis 40 Gew.-%, bevorzugt 2,5 bis 30 Gew.-%, besonders bevorzugt 5 bis 25 Gew.-%, und ganz besonders bevorzugt 10 bis 20 Gew.-% weitere (von Wasser verschiedene) Lösungsmittel.

Die Lösungsmittelkomponenten, insbesondere auch die genannten besonders bevorzugten Lösungsmittelkombinationen, kann vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittelgemisches noch verstärkt.

Die erfindungsgemäßen Farbmittelzubereitungen können weitere Hilfsmittel, wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel^{®}-Marken der Fa. Avecia Lim.) und dessen Alkalimetallsalze, Glutardialdehyd und/oder Tetramethylolacetylendihamstoff.

Die erfindungsgemäßen Farbmittelzubereitungen werden zur Herstellung von wässrigen Tinten für den Ink-Jet oder Tintenstrahldruck verwendet.

Die Herstellung der Tinten erfolgt durch Verdünnen der erfindungsgemäßen Farbmittelzubereitungen mit Wasser. Dabei kann man neben Wasser auch noch weitere Lösemittel und Hilfsmittel zugeben.

Wasser stellt den Hauptbestandteil der Tinten dar, wobei vollentsalztes Wasser, wie es beispielsweise durch die Verwendung eines Ionenaustauschers erhältlich ist, bevorzugt ist. Der Wassergehalt beträgt üblicherweise von 50 bis 95 Gew.-%. Für die erfindungsgemäßen Tinten ist dabei ein Wassergehalt von 60 bis 80 Gew.-% bevorzugt.

Die Tinten weisen einen Gehalt von in der Regel 0,1 bis 25 Gew.-%, bevorzugt von 0,5 bis 10 Gew.-%, an statistischen Polyurethancopolymeren auf.

Als weitere Komponente können die Tinten organische Lösungsmittel als Zusatz enthalten. Niedermolekulares Polytetrahydrofuran ist ein bevorzugter Zusatz, es kann allein oder vorzugsweise im Gemisch mit einem oder mehreren schwer verdampfbaren, in Wasser löslichen oder mit Wasser mischbaren organischen Lösungsmitteln eingesetzt werden.

Das bevorzugt verwendete Polytetrahydrofuran hat üblicherweise ein mittleres Molekulargewicht M_{w} von 150 bis 500 g/mol, bevorzugt von 200 bis 300 g/mol und besonders bevorzugt von etwa 250 g/mol.

Wenn Polytetrahydrofuran im Gemisch mit weiteren organischen Lösungsmitteln vorliegt, werden hierfür im Allgemeinen schwer verdampfbare und damit eine wasserrückhaltende Wirkung besitzende organische Lösungsmittel eingesetzt, die in Wasser löslich oder mit Wasser mischbar sind. Unter schwer verdampfbaren Lösemitteln sind dabei einen Siedepunkt > 100°C aufweisende Lösungsmittel zu verstehen.

Als Lösungsmittel eignen sich mehrwertige Alkohole, bevorzugt unverzweigte und verzweigte mehrwertige Alkohole mit 2 bis 8, insbesondere 3 bis 6 Kohlenstoffatomen, wie Ethylenglykol, 1,2- und 1,3-Propylenglykol oder Glycerin.

Weitere geeignete Lösungsmittel sind Polyethylen- und Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propyl- und - butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Weiterhin als Lösungsmittel geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon.

Besonders bevorzugte Lösungsmittel sind 1,2- und 1,3-Propylenglykol, Glycerin, Sorbit, Diethylenglykol, Polyethylenglykol (M_{w} 300 bis 500 g/mol), Diethylenglykolmonobutylether, Triethylenglykolmono-n-butylether, Pyrrolidon, N-Methylpyrrolidon und N-(2-Hydroxyethyl)pyrrolidon.

Polytetrahydrofuran kann auch mit einem oder mehreren (z.B. zwei, drei oder vier) der oben aufgeführten Lösungsmittel gemischt werden.

Die Tinten enthalten in der Regel 0,1 bis 40 Gew.-%, bevorzugt 5 bis 30 Gew.-%, besonders bevorzugt 10 bis 25 Gew.-%, und ganz besonders bevorzugt 10 bis 20 Gew.-% weitere (von Wasser verschiedene) Lösungsmittel.

Die Lösungsmittelkomponenten, insbesondere auch die genannten besonders bevorzugten Lösungsmittelkombinationen, können vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittelgemisches noch verstärkt.

Weiterhin geeignete Zusätze sind Erythrit, Pentaerythrit, Pentite wie Arabit, Adonit und Xylit und Hexite wie Sorbit, Mannit und Dulcit.

Die Tinten können weitere Hilfsmittel, wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel^{®}-Marken der Fa. Avecia Lim.) und dessen Alkalimetallsalze, Glutardialdehyd und/oder Tetramethylolacetylendiharnstoff, Protectole, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Benetzer (z.B. benetzend wirkende Tenside auf der Basis von ethoxylierten oder propoxylierten Fett- oder Oxoalkoholen, Propylen-oxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder bevorzugt Polyethersiloxan-Copolymeren, insbesondere alkoxylierten 2-(3-Hydroxy-propyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil der erfindungsgemäßen Pigmentzubereitungen sind, beträgt ihre Gesamtmenge in der Regel 2 Gew.-%, insbesondere 1 Gew.-%, bezogen auf das Gewicht der Farbmittelzubereitung.

Die Tinten weisen üblicherweise eine dynamische Viskosität von 1 bis 20 mPa • s auf, vorzugsweise von 2 bis 15 mPa • s auf, gemessen mit einem Rotations-viskosimeter der Fa. Haake nach DIN 53019-1.

Die Oberflächenspannung der Tinten beträgt in der Regel 24 bis 70 mN/m, insbesondere 30 bis 60 mN/m, gemessen mit einem Digital-Tensiometer K 10 der Fa. Krüss bei Raumtemperatur. Der pH-Wert der erfindungsgemäßen Farbmittel-zubereitungen liegt im Allgemeinen bei 5 bis 10, vorzugsweise bei 7 bis 9, gemessen mit einem pH-Meter 763 der Fa. Knick.

Die Tinten weisen eine besonders niedrige kinematische Viskosität auf, insbesondere im Vergleich zu solchen Tinten, die ein herkömmliches polymeres Bindemittel enthalten.

Zur Formulierung der Tinten kann man so vorgehen, dass die statistischen Polyurethancopolymere mit Wasser, einem oder mehreren Pigmenten und einem oder mehreren Melaminderivaten sowie gegebenenfalls Zusätzen zu Anreibungen vermischt werden, wie oben beschrieben. Möglich ist jedoch, das oder die Melaminderivate erst bei der Verdünnung mit Wasser und somit der abschließenden Formulierung der Tinte zuzusetzen.

Ein weiterer Aspekt der vorliegenden Erfindung ist ein Verfahren zum Bedrucken von flächigen oder dreidimensionalen Substraten nach dem Ink-Jet-Verfahren unter Verwendung der erfindungsgemäßen Tinten. Dazu druckt man die erfindungsgemäßen Farbmittelzubereitungen auf das Substrat auf.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble-Jet-Verfahren) Druck auf das Tintensystem ausgeübt und so die Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die Tinten für das Continuous Ink-Jet-Verfahren und für das Verfahren mittels eines piezoelektrischen Kristalls.

Üblicherweise werden die nach dem Ink-Jet-Verfahren bedruckten Flächen mit Wärme behandelt, um die Drucke zu fixieren und das Dispergierbindemittelsystem zu vernetzen. Die Wärmeeinwirkung kann beispielsweise mit Wasserdampf oder Heißluft durchgeführt werden. Ein üblicher Temperaturbereich ist von 150 bis 180°C für 5 bis 8 Minuten. Bei Heißluft empfiehlt sich, das bedruckte Textil bei 180 bis 200°C während etwa einer Minute zu behandeln.

In einer weiteren Ausführungsform der vorliegenden Erfindung nimmt man eine thermisch oder durch aktinische Strahlung, vorzugsweise im UV-Bereich, initiierte Vernetzung vor.

Als Substratmaterialien sind geeignet:
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Nonwovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika.

Die Tinten zeichnen sich durch vorteilhafte Anwendungseigenschaften aus, vor allem gutem Anschreibverhalten und gutem Dauerschreibverhalten (Kogation) sowie gutem Trocknungsverhalten. Sie ergeben Druckbilder hoher Qualität, d.h. hoher Brillanz und Farbtiefe sowie hoher Reib-, Licht-, Wasser- und Nassreibechtheit. Besonders geeignet sind sie zum Drucken auf Textil. Besonders vorteilhaft ist, dass sich das erfindungsgemäße Verfahren zum Bedrucken von Textilien besonders schnell und mit hohem Durchsatz pro Zeiteinheit durchführen lässt. Außerdem wurde gefunden, dass Fixierung der Bedruckung auch nach mehreren Wäschen hervorragend ist. Desgleichen ist die Fixierung bei auch bei solchen Substraten ausgezeichnet, die einmal oder mehrfach gebogen, geknickt oder gefaltet werden.

Ein weiterer Aspekt der Erfindung betrifft Substrate, insbesondere textile Substrate, die nach einem der oben genannten erfindungsgemäßen Verfahren bedruckt wurden und sich durch besonders scharf gedruckte Bilder oder Zeichnungen mit ausgezeichneter Fixierung auszeichnen.

### Beispiele

### Beispiel 1

### Herstellung eines statistischen Polyurethans

6,75 g Neopentylglykol, 7,03 g Dimethylolpropionsäure, 51,95 g eines Polyesterdiols und 53,01 g 4,4'-Diphenylmethandiisocyanat werden in 118,74 g Tetrahydrofuran gelöst und nach Zugabe von einem Tropfen Dibutylzinndilaurat unter Rückfluß zur Reaktion gebracht. Das Ende der Reaktion wird durch vollständiges Abreagieren von Isocyanat detektiert. Nach Abkühlung mit einem Eisbad wird die Reaktionslösung mit 6,25 g Diethanolamin (in 6,25 g THF gelöst) versetzt und mit 5,40 g Triethylamin neutralisiert. Nach Zugabe von 315 g Wasser wird THF abdestilliert.

### Beispiel 2

### Herstellung eines statistischen Polyurethans

22,70 g Neopentylglykol, 23,60 g Dimethylolpropionsäure, 175,3 g eines Polyesterdiols und 178,40 g 4,4'-Diphenylmethandiisocyanat werden in 400 g wasserfreiem Aceton gelöst und nach Zugabe von einem Tropfen Dibutylzinndilaurat unter Rückfluß zur Reaktion gebracht. Das Ende der Reaktion wird durch vollständiges Abreagieren von Isocyanat detektiert. Nach Abkühlung mit einem Eisbad wird die Reaktionslösung mit 17,80 g Diethanolamin (in 61,40 g Aceton gelöst) versetzt und mit 17,80 g Triethylamin neutralisiert. Nach Zugabe von 500 g Wasser wird Aceton abdestilliert.

### Beispiel 3

### Herstellung einer Farbmittelzubereitung

Die Anreibungen für die organischen Pigmente wurden auf einem Skandex mit 60 g Glaskugeln (Größe 0,25 - 0,55 mm) hergestellt. Die Rezeptur ist in Tabelle 1 wiedergegeben. Nach dem Einwiegen der flüssigen Rohstoffe, der Glaskugeln und dem Pigment wurde in einer Schüttelapparatur (Skandex) geschüttelt. Danach wurde eine Probe der Zubereitung entnommen und die Teilchengröße bestimmt. Der pH-Wert wurde gemessen und gegebenenfalls mit Triethanolamin auf 7 bis 8 angehoben.

**Tabelle 1: Rezeptur Farbmittelzubereitung**

| | |
|---|---|
| 6,00 g | Pigment P.R.122 |
| 18,02 g | Dispergierbindemittel aus Beispiel 1, 33 gew.-%ig |
| 0,30g | Biozid Proxel XL2 |
| 2,69g | MF-Harz |
| 29,94 g | VE-Wasser |

Nach 4-stündiger Dispergierung im Skandex wurde mit einem Teilchengrößenmeßgerät (Coulter LS230) die Partikelgröße zu 155 nm bestimmt.

### Beispiel 4

### Herstellung einer Tinte

Für die Tintenherstellung (Rezeptur siehe Tabelle 2) wurde Harnstoff in Wasser gelöst. Danach wurden die in Tabelle 2 angegebenen Lösungsmittel der Reihe nach zugegeben und auf der Rollbank gut gemischt. Zum Schluß wurde die Farbmittelzubereitung zugegeben und die Mischung noch 15 Minuten weitergerührt.

**Tabelle 2: Rezeptur für die Herstellung einer Magenta-Tinte**

| | |
|---|---|
| 25,00 g | Farbmittelzubereitung aus Beispiel 3,10 gew.-%ig |
| 1,00g | Harnstoff |
| 3,00 g | Butyltriglykol (Wasserrückhaltemittel) |
| 7,00 g | Pluriol E 400 zur Einstellung der Oberflächenspannung |
| 8,00 g | Glycerin |
| 0,50 g | Biozid Proxel XL 2 |
| 0,50 g | Netzmittel Tego Wet 260 |
| 53,00 g | VE-Wasser |

Die Viskosität der Tinte bei 25°C betrugt 3,85 mPas, der pH-Wert 8,57. Die Tinte wurde über einen Glasfaser-Filter (Ausschlußgröße 1 µm) abgesaugt. Anschließend wurden die Tinten mit einem Epson 3000 720dpi Piezo-Drucker auf Papier verdruckt. Der Drucktest auf Papier ergab einen streifenfreien Druck mit höchstens dem Ausfall von einer Düse pro 25 Seiten.

### Beispiel 5

Anschließend wurde nach ISO-Norm 105-D02:1993 ein Reibechtheits- und nach ISO-Norm 105-C06:1994 ein Waschechtheitstest durchgeführt. In Tabelle 3 sind die Ergebnisse zusammengefaßt (1 = sehr schlecht, 5 = sehr gut):

**Tabelle 3: Echtheiten von Drucken mit der Magenta-Tinte aus Beispiel 4**

| Substrat | Reibechtheit (trocken) | Reibechtheit (naß) | Waschechtheit |
|---|---|---|---|
| Baumwolle | 4-5 | 3-4 | 4-5 |
| Polyester-/Baumwolle-Gemisch (67%/33%) | 4 | 3 | 3-4 |
| Polyester-Stapelfaser | 4 | 3-4 | 3-4 |
| Polyester-Satin | 4-5 | 4-5 | 3-4 |

## Patentansprüche

1. Verfahren zum Bedrucken flächiger oder dreidimensionaler Substrate nach dem Ink-Jet-Verfahren unter Verwendung thermisch vernetzbaren, wässrigen Aufzeichnungsflüssigkeiten, enthaltend statistische Polyurethancopolymere und ein oder mehrere Melaminderivate als Vernetzer.

2. Verfahren nach Anspruch 1, **dadurch gekennzeichnet, dass** die Aufzeichnungsflüssigkeiten ein oder mehrere Melaminderivate der allgemeinen Formel (I) 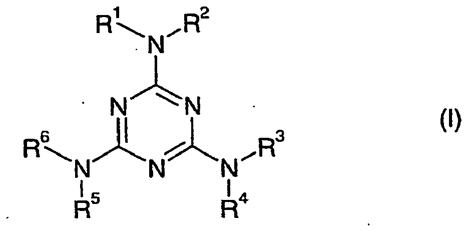 enthalten, wobei die Variablen wie folgt definiert sind:
R¹ bis R⁶ gleich oder verschieden sind und ausgewählt sind aus Wasserstoff, (CH₂O)_{z}-R⁷, CH₂-OR⁷, CH(OR⁷)₂ und CH₂-N(R⁷)₂
wobei z = 1 bis 10 ist und R⁷gleich oder verschieden sind und ausgewählt sind aus
Wasserstoff, -C₁-C₁₂-Alkyl, verzweigt oder unverzweigt;
Alkoxyalkylen, wie (-CH₂-CH₂-O)ₘ-H, (-CHCH₃-CH₂-O)ₘ H, (-CH₂-CHCH₃-O)ₘ-H, (-CH₂-CH₂-CH₂-CH₂-O)ₘ-H, wobei m eine ganze Zahl von 1 bis 20 ist.

3. Verfahren nach Anspruch 2, **dadurch gekennzeichnet, dass** R¹ und R² in Formel (I) Wasserstoff sind.

4. Verfahren nach Anspruch 2 oder 3, **dadurch gekennzeichnet, dass** R³ in Formel (I) gleich CH₂OH ist.

5. Bedruckte flächige oder dreidimensionale Substrate, erhältlich nach dem Verfahren nach einem der Ansprüche 1 bis 4.

6. Verfahren zur Herstellung von Farbmittelzubereitungen für Aufzeichnungsflüssigkeiten wie in einem der Ansprüche 1-4 definiert, enthaltend ein Gemisch aus statistischen Polyurethancopolymeren und einem oder mehreren Melaminderivaten als Dispergierbindemittel, Wasser, gegebenenfalls ein oder mehrere organische Lösungsmittel und ein feinteiliges anorganisches oder organisches Farbmittel, **dadurch gekennzeichnet, dass** man Dispergierbindemittel, Wasser, gegebenenfalls ein oder mehrere organische Lösungsmittel und ein feinteiliges anorganisches oder organisches Farbmittel in einer Kugelmühle innig miteinander vermischt.

7. Farbmittelzubereitungen für Aufzeichnungsflüssigkeiten, erhältlich nach dem Verfahren gemäß Anspruch 6.

## Claims

1. The method for printing sheetlike or three-dimensional substrates by the ink jet process using thermally crosslinkable, aqueous recording fluids comprising random polyurethane copolymers and one or more melamine derivatives as crosslinkers.

2. The method according to claim 1, wherein the recording fluids comprise one or more melamine derivatives of the general formula (I) 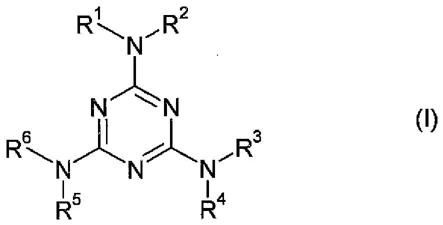 where:
R¹ to R⁶ are the same or different and are each selected from hydrogen, (CH₂O)_{z}-R⁷, CH₂-OR⁷, CH(OR⁷)₂ and CH₂-N(R⁷)₂
where z is from 1 to 10 and each R⁷ is the same or different and is selected from hydrogen, C₁-C₁₂-alkyl, branched or unbranched;
alkoxyalkylene, such as (-CH₂-CH₂-O)ₘ-H, (-CHCH₃-CH₂-O)ₘ-H, (-CH₂-CHCH₃-O)ₘ-H, (-CH₂-CH₂-CH₂-CH₂-O)ₘ-H, where m is an integer from 1 to 20.

3. The method according to claim 2, wherein R¹ and R² are each hydrogen in formula (I).

4. The method according to claim 2 or 3, wherein R³ is CH₂OH in formula (I).

5. Printed sheetlike or three-dimensional substrates obtainable by the method of any of clams 1 to 4.

6. A process for preparing colorant preparations for recording fluids as defined in any of claims 1-4, comprising a mixture of random polyurethane copolymers and one or more melamine derivatives as dispersing binders, water, optionally one or more organic solvents and a finely divided inorganic or organic colorant, which comprises intimately mixing together dispersing binders, water, optionally one or more organic solvents and a finely divided inorganic or organic colorant in a ball mill.

7. Colorant preparations for recording fluids, obtainable by the process according to claim 6.

## Revendications

1. Procédé pour l'impression de supports plans minces ou tridimensionnels selon le procédé jet d'encre avec utilisation de liquides d'enregistrement aqueux, réticulables thermiquement, contenant des copolymères polyuréthane statistiques et un ou plusieurs dérivés de mélamine en tant qu'agent(s) de réticulation.

2. Procédé selon la revendication 1, **caractérisé en ce que** les liquides d'enregistrement contiennent un ou plusieurs dérivés de mélamine de formule générale (I) 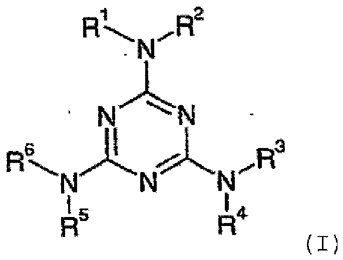 les variables étant définies comme suit :
R¹ à R⁶ sont identiques ou différents et sont choisis parmi un atome d'hydrogène, (CH₂O)_{z}-R⁷, CH₂-OR⁷, CH(OR⁷)₂ et CH₂-N(R⁷)₂
z valant de 1 à 10 et les radicaux R⁷ étant identiques ou différents et étant choisis parmi,
un atome d'hydrogène, un groupe alkyle en C₁-C₁₂ ramifié ou non ramifié ;
des groupes alcoxyalkylène, tels que (-CH₂-CH₂-O)ₘ-H, (-CHCH₃-CH₂-O)ₘ-H, (-CH₂-CHCH₃-O)ₘ-H, (-CH₂-CH₂-CH₂-CH₂-O)ₘ-H, m étant un nombre entier valant de 1 à 20.

3. Procédé selon la revendication 2, **caractérisé en ce que** R¹ et R² dans la formule (I) sont des atomes d'hydrogène.

4. Procédé selon la revendication 2 ou 3, **caractérisé en ce que** R³ dans la formule (I) représente CH₂OH.

5. Supports plans minces ou tridimensionnels, imprimés, pouvant être obtenus conformément au procédé selon l'une quelconque des revendications 1 à 4.

6. Procédé pour la production de préparations de matières colorantes pour liquides d'enregistrement tel que défini dans l'une quelconque des revendications 1 à 4, contenant un mélange de copolymères polyuréthane statistiques et d'un ou plusieurs dérivés de mélamine en tant que liant-dispersant, de l'eau, éventuellement un ou plusieurs solvants organiques et une matière colorante organique ou inorganique finement divisée, **caractérisé en ce que** dans un broyeur à boulets on mélange intimement les uns avec les autres le liant-dispersant, l'eau, éventuellement un ou plusieurs solvants organiques et une matière colorante organique ou inorganique finement divisée.

7. Préparations de matières colorantes pour liquides d'enregistrement, pouvant être obtenues conformément au procédé selon la revendication 6.
